# EUROPÄISCHE PATENTANMELDUNG

(11) **EP 4 480 694 A1**
(43) Veröffentlichungstag der Anmeldung: **25.12.2024**
(21) Anmeldenummer: 24182840.9
(22) Anmeldetag: 18.06.2024
(51) Int. Cl.: B32B 1/08, B32B 7/02, B32B 7/12, B32B 27/08, B32B 27/30, B32B 27/32, B32B 37/15, B65D 35/00, B65D 65/40

(54) **TUBENLAMINAT MIT GENAU EINER VORGEFERTIGTEN FOLIE UND BEIDERSEITS AUFGETRAGENEN POLYMERLAGEN**

(30) Priorität: 23.06.2023 DE 102023116656; 30.06.2023 DE 102023117415
(71) Anmelder: Huhtamaki Flexible Packaging Germany GmbH & Co. KG, 87671 Ronsberg (DE)
(72) Erfinder: Souza, Mayara, 59151250 Parnamirim - RN (BR); Losert, Wolfgang, 87634 Obergünzburg (DE); Jägerhuber, Rebekka, 87733 Markt Rettenbach (DE); Spöttle, Benjamin, 87477 Sulzberg (DE)
(74) Vertreter: Ruttensperger Lachnit Trossin Gomoll

(57) **Zusammenfassung**

Ein Tubenlaminat (10) umfasst wenigstens drei Polymerlagenanordnungen (12, 16, 20) mit jeweils wenigstens einer Polymerlage (22, 24, 26, 28, 30), wobei genau eine Polymerlagenanordnung (12, 16, 20) als Trägerstruktur (12) eine vorgefertigte Folie (12) ist, wobei eine erste Seite (12a) der vorgefertigten Folie (12) eine eine Außenseite (10a) des Tubenlaminats (10) bildende äußere Polymerlagenanordnung (16) trägt, und wobei eine der ersten Seite (12a) entgegengesetzte zweite Seite (12b) der vorgefertigten Folie eine eine Innenseite (10b) des Tubenlaminats (10) bildende innere Polymerlagenanordnung (20) trägt, wobei die äußere (16) und die innere Polymerlagenanordnung (20) im fließfähigen Zustand aufgetragene Polymerlagenanordnungen (16, 20) sind, wobei das Tubenlaminat (10) außer der Trägerstruktur (12) keine weitere vorgefertigte Folie aufweist.

## Beschreibung

Die vorliegende Erfindung betrifft ein Tubenlaminat zur Herstellung von Tubenbehältern. Das Tubenlaminat umfasst wenigstens drei, vorzugsweise genau drei, Polymerlagenanordnungen mit jeweils wenigstens einer Polymerlage.

Die vorliegende Erfindung betrifft außerdem ein Verfahren zur Herstellung des vorstehend genannten Tubenlaminats, wie es nachfolgend beschrieben und weitergebildet wird. Aus der Beschreibung und vorteilhaften Weiterbildung des Tubenlaminats hervorgehende Verfahrensaspekte sind vorteilhafte Weiterbildungen des erfindungsgemäßen Verfahrens und umgekehrt.

Tubenlaminate zur Herstellung eines Tubenbehälters bzw. eines grob schlauchförmigen Tubenkörpers, welcher an einem Ende durch eine Siegelnaht verschlossen ist, für einen Tubenbehälter, umfassen in der Regel mehrere Polymerlagen, um unterschiedliche technische Anforderungen an den Tubenbehälter zu erfüllen. Der Tubenkörper des Tubenbehälters und damit das Tubenlaminat selbst müssen ausreichend mechanisch belastbar sein, um etwa ein Herunterfallen aus einem Regal zu überstehen, müssen über ausreichend lange Zeit elastisch bleiben, um ein sukzessives Entleeren des Tubenbehälters durch wiederholtes Zusammendrücken desselben zu ermöglichen, und müssen unter Umständen Barriereeigenschaften gegen eine Migration von Sauerstoff oder/und Wasserdampf oder/und Aromen durch die Behälterwand bereitstellen. Außerdem wird der Tubenkörper häufig durch Siegeln überlappender Endbereiche eines Laminatrohlings gebildet, sodass auch Siegelfähigkeiten am Tubenlaminat gewünscht sein können, ebenso wie eine Bedruckbarkeit einer freiliegenden Oberfläche.

In der Regel werden mehrlagige Tubenlaminate durch Verbindung vorgefertigter Folien gebildet. Hierzu werden im Stand der Technik üblicherweise mehrere gesonderte Folien durch Extrusionskaschierung oder/und durch Adhäsionskaschierung miteinander verbunden. Bei der Extrusionskaschierung wird ein thermisch erweichtes thermoplastisches Polymer zwischen zwei vorgefertigte Folien extrudiert, um nach einem Aushärten durch Abkühlung die beiden Folien miteinander zu verbinden. Bei der Adhäsionskaschierung wird ein Kaschierkleber als Dispersion oder Lösung zwischen den zu verbindenden Folien aufgetragen, um nach einem Aushärten durch Verflüchtigung eines Lösungs- oder Dispersionsmittels die beiden Folien miteinander zu verbinden.

Aufgabe der vorliegenden Erfindung ist es, eine technische Lehre anzugeben, welche es ermöglicht, qualitativ hochwertige Tubenlaminate kostengünstiger und mit größerer Flexibilität herzustellen.

Diese Aufgabe löst die vorliegende Erfindung gemäß einem Produktaspekt durch ein Tubenlaminat mit wenigstens drei, vorzugsweise mit genau drei, Polymerlagenanordnungen mit jeweils wenigstens einer Polymerlage, wobei genau eine Polymerlagenanordnung als Trägerstruktur eine vorgefertigte Folie ist, wobei eine erste Seite der vorgefertigten Folie eine eine Außenseite des Tubenlaminats bildende äußere Polymerlagenanordnung trägt, und wobei eine der ersten Seite entgegengesetzte zweite Seite der vorgefertigten Folie eine eine Innenseite des Tubenlaminats bildende innere Polymerlagenanordnung trägt, wobei die äußere und die innere Polymerlagenanordnung im fließfähigen Zustand aufgetragene Polymerlagenanordnungen sind, wobei das Tubenlaminat außer der Trägerstruktur keine weitere vorgefertigte Folie aufweist.

Die Aufgabe löst die vorliegende Erfindung gemäß einem Verfahrensaspekt durch ein Verfahren zur Herstellung eines Tubenlaminats wie es vorstehend beschrieben und nachstehend weitergebildet ist, umfassend die folgenden Schritte:
- Bereitstellen einer Polymerlagenanordnung in Gestalt einer vorgefertigten Folie als Trägerstruktur,
- Auftragen einer äußeren Polymerlagenanordnung im fließfähigen Zustand auf einer ersten Seite der Trägerstruktur und dadurch Bilden einer freiliegenden Außenseite des Tubenlaminats, und
- Auftragen einer inneren Polymerlagenanordnung im fließfähigen Zustand auf einer der ersten entgegengesetzten zweiten Seite der Trägerstruktur und dadurch Bilden einer freiliegenden Innenseite des Tubenlaminats.

Grundidee der vorliegenden Erfindung ist daher, dass das Tubenlaminat ausgehend von einer einzigen vorgefertigten Folie nur durch Auftrag weiterer Lagen im fließfähigen Zustand, nicht jedoch durch Kaschierung einer weiteren Folie gebildet ist bzw. gebildet wird.

Es genügt daher die Fertigung bzw. der Erwerb einer einzigen vorgefertigten Folie als grundlegende Trägerstruktur des darauf aufbauenden Tubenlaminats. Alle weiteren Lagen des Tubenlaminats werden im fließfähigen Zustand aufgetragen, also bevorzugt durch Extrusion, wobei ein zusätzlicher oder alternativer Auftrag durch Auftragswalzen nicht ausgeschlossen sein soll. Die auf beiden Seiten der vorgefertigten Folie aufgetragenen Polymerlagen können individuell erzeugt und erforderlichenfalls geändert werden. Das Tubenlaminat ist somit mit geringem Aufwand an veränderte Randbedingungen anpassbar.

Der Auftrag mehrerer Polymerlagen einer Polymerlagenanordnung kann in einem Arbeitsgang durch Coextrusion aller Polymerlagen der Polymerlagenanordnung erfolgen oder kann durch mehrere aufeinander folgende Extrusionsschritte erfolgen, von welchen wenigstens einer, eine ausreichende Anzahl an Polymerlagen in der betreffenden Polymerlagenanordnung vorausgesetzt, wiederum ein Coextrusionsschritt von zwei oder mehr Lagen sein kann. Es können auch alle Polymerlagen der Polymerlagenanordnung einzeln nacheinander und übereinander extrudiert werden.

Es sind Tubenbehälter bekannt, welche durch Blasformen eines mehrlagigen Rohlings gebildet werden. Von diesen Tubenbehältern unterscheidet sich das vorliegende Tubenlaminat durch seine im Wesentlichen konstante Dicke über seine zur Dickenrichtung orthogonale Längen- und Breitenrichtung hinweg und ebenso durch die im Wesentlichen konstante Dicke der einzelnen Lagen der Polymerlagenanordnungen des Tubenlaminats. Sofern eine Polymerlagenanordnung aus der inneren und der äußeren Polymerlagenanordnung mehr als eine Polymerlage aufweist, sind diese mehreren Polymerlagen in Dickenrichtung der Trägerstruktur aufeinander folgend übereinander angeordnet.

Bevorzugt weist das Tubenlaminat eine Gesamtdicke von zwischen 110 µm und 350 µm, bevorzugt 300 µm, auf, einschließlich der Bereichsgrenzen. Mit dieser Gesamtdicke kann ein ausreichend dichter und mechanisch belastbarer Tubenkörper geschaffen werden, dessen Eigengewicht ausreichend gegenüber dem Füllgewicht des Tubenbehälters zurückbleibt.

Bevorzugt weist die vorgefertigte Folie als die Trägerstruktur eine Dicke von zwischen 30 µm und 200 µm auf, einschließlich der Bereichsgrenzen. Besonders bevorzugt weist die Trägerstruktur eine Dicke im Bereich von 50 µm bis 140 µm auf. Dies ermöglicht die Bereitstellung einer für die Aufnahme weiterer fließfähig aufgetragener Lagen ausreichend stabilen Trägerstruktur. Die Trägerstruktur kann bereits mit funktionalen Polymerlagen versehen sein, wie etwa wenigstens einer Barrierelage zur Verringerung der Transferraten von Sauerstoff oder/und Wasserdampf oder/und Aromen durch die Trägerstruktur und damit durch das Tubenlaminat hindurch. Die Bereitstellung von funktionalen Polymerlagen in der Trägerstruktur erleichtert die Bildung der von der Trägerstruktur getragenen inneren und äußeren Polymerlagenanordnung, da diese dann jene Funktionen und damit funktionalen Lagen nicht mehr aufweisen müssen, welche bereits in der Trägerstruktur realisiert sind.

Die vorgefertigte Folie ist optional eine Blasfolie oder eine Cast-Folie, also eine in einem Gießverfahren hergestellte Folie.

Grundsätzlich kann die vorgefertigte Folie eine einzige Lage aufweisen. Für heutige komplexe Verpackungsanwendungen ist es jedoch zur Realisierung gewünschter Funktionen vorteilhaft, wenn die vorgefertigte Folie mehrlagig ist. Bevorzugt ist die vorgefertigte Folie als die Trägerstruktur überwiegend, also zu mehr als 50 %-Gew., aus einem Polyolefin, besonders bevorzugt aus einem Polyethylen gebildet. Aber auch Polypropylen soll nicht ausgeschlossen sein. Zur Bereitstellung hoher Barriereeigenschaften, insbesondere gegen eine Migration von Aromen aus dem verpackten Füllgut durch das Tubenlaminat in die Umgebung, kann das Tubenlaminat eine Lage aus einem Cyclo-Olefin-Copolymer (COC) aufweisen.

Die vorgefertigte Folie kann als Barrierelagenanordnung eine Metallisierung oder/und eine Keramiklage oder/und eine Lage basierend auf einem Vinylalkohol oder/und eine mit wenigstens teilweise keramischen Partikeln gefüllte Polymerlage aufweisen. Als Metallisierung ist eine im Vakuum abgeschiedene Aluminiumlage bevorzugt. Als Keramiklage kommen beispielsweise Siliziumoxid (SiOₓ) oder Aluminiumoxid (Al_{y}O_{z}) infrage. Eine Barrierelage basierend auf Vinylalkohol kann aus einem Ethylen-Vinylalkohol-Copolymer (EVOH), aus einem Polyvinylalkohol (PVOH) oder/und aus einem Butenediol-Vinylalkohol-Copolymer (BVOH) gebildet sein. Keramische Partikel als Füllstoffe einer Polymerlage sind bevorzugt Metall-Nanopartikel, besonders bevorzugt in Flockenform, mit einer den Metallkern umschließenden Metalloxidhaut. Aufgrund der selbst-passivierenden Eigenschaften von Aluminium sind Nanopartikel aus Aluminium mit einer einen Aluminiumkern umgebenden Aluminiumoxidhaut bevorzugt. Besonders bevorzugt ist der Aluminiumkern flocken- oder tellerförmig, weist also in einer Raumrichtung eine erheblich geringere Abmessung als in den beiden zu dieser Raumrichtung und zueinander orthogonalen Raumrichtungen auf.

Erforderlichenfalls kann die vorgefertigte Folie eine oder mehrere Haftvermittlerlagen aufweisen, um mit einer Haftvermittlerlage zwei benachbarte Lagen zu verbinden. So kann die vorgefertigte Folie beispielsweise eine oder mehrere Lagen aus einem Maleinsäureanhydrid-gepfropften Polymer, aus Ethylen-Acrylsäure-Copolymer (EAA), und dergleichen aufweisen.

Eine oder mehrere Polymerlagen der vorgefertigten Folie können Additive aufweisen, wie beispielsweise ein Nucleationsmittel, um den Kristallisationsgrad des Polymers der jeweiligen Lage zu erhöhen. Ebenso kann eine oder können mehrere Polymerlagen Farbpigmente enthalten, um der vorgefertigten Folie eine bestimmte Farbe zu geben. Eine oder mehrere Polymerlagen der vorgefertigten Folie kann bzw. können eine geschäumte Lage sein, etwa um bestimmte optische Effekte bereitzustellen oder um das Flächengewicht der Polymerlage ohne Dickenänderung zu verringern.

Die Polymerlagen der Trägerstruktur können ungereckt vorliegen, können in einer einzigen Richtung monoaxial gereckt sein oder können zur Erhöhung der Festigkeit im Vergleich zu einer ungereckten identisch aufgebauten Folie gleicher Dicke biaxial gereckt sein. Aufgrund der beschriebenen Herstellungsweise ist die vorgefertigte Folie die einzige Polymerlagenanordnung des Tubenlaminats, welches optional eine molekulare Orientierung aufgrund von Reckung aufweist.

Die innere und die äußere Polymerlagenanordnung weisen bevorzugt jeweils eine Dicke im Bereich von zwischen 15 µm und 130 µm auf, einschließlich der Bereichsgrenzen.

Die innere oder/und die äußere Polymerlagenanordnung kann bzw. können einlagig sein. Bevorzugt ist wenigstens eine Polymerlagenanordnung aus der inneren und der äußere Polymerlagenanordnung mehrlagig, besonders bevorzugt sind beide mehrlagig.

Grundsätzlich können die innere und die äußere Polymerlagenanordnung bezüglich der Trägerstruktur spiegelsymmetrisch angeordnet sein. Die Spiegelsymmetrie ist eine Spiegelsymmetrie hinsichtlich der Materialien der Lagenfolge auf beiden Seiten der Trägerstruktur in Richtung von der Trägerstruktur weg oder/und ist eine Spiegelsymmetrie hinsichtlich der Dicke der Lagen der Lagenfolge auf beiden Seiten der Trägerstruktur in Richtung von der Trägerstruktur weg.

Das Herstellungsverfahren zur Bildung des vorliegend diskutierten Tubenlaminats gestattet jedoch vorteilhaft eine individuelle Ausbildung jeder einzelnen Lage beiderseits der Trägerstruktur. Für Tubenlaminate kommt es auf eine symmetrische Ausgestaltung weder hinsichtlich der Materialfolge noch hinsichtlich der Folge von Dickenabmessungen an. Bevorzugt ist daher das Tubenlaminat bezüglich der Trägerstruktur hinsichtlich Materialfolge oder/und hinsichtlich einer Folge von Dickenabmessungen der einzelnen Lagen beiderseits der Trägerstruktur asymmetrisch.

Wenigstens eine Polymerlagenanordnung aus der inneren und der äußeren Polymerlagenanordnung stellt eine freiliegende siegelfähige Oberfläche bereit. Dies ist in der Regel die innere Polymerlagenanordnung. Dann jedoch, wenn eine längs einer Tubenlängsachse verlaufende Längssiegelnaht eines aus dem Tubenlaminat geformten Tubenkörpers durch Siegeln überlappender Endbereiche eines aus dem Tubenlaminat gebildeten Tubenlaminatrohlings realisiert werden soll, ist die Ausbildung einer freiliegenden siegelfähigen Oberfläche auch an der äußeren Polymerlagenanordnung von Vorteil. In diesem Fall wird nämlich "innen gegen außen" gesiegelt. Zusätzlich oder alternativ stellt bevorzugt die äußere Polymerlagenanordnung eine freiliegende bedruckbare Oberfläche bereit. Hierzu ist es vorteilhaft, wenn die äußere Polymerlagenanordnung wenigstens eine Polymerlage mit Farbpigmenten, insbesondere mit weißen Farbpigmenten, als neutralen Untergrund bereitstellt, um außen auf die äußere Polymerlagenanordnung aufgetragene Druckfarben besonders gut und unverfälscht zur Geltung bringen zu können.

Bevorzugt sind die beiden außenliegenden Lagen der inneren und der äußeren Polymerlagenanordnung, welche jeweils eine freiliegende Oberfläche des Tubenlaminats bilden, aus demselben Material hergestellt. Dadurch wird ihre gute Siegelbarkeit miteinander sichergestellt.

Da die äußere Polymerlagenanordnung somit in der Regel eine umfangreichere funktionale Aufgabenstellung als die innere Polymerlagenanordnung löst, weist die äußere Polymerlagenanordnung bevorzugt die gleiche Dicke auf wie oder weist eine größere Dicke auf als die innere Polymerlagenanordnung.

Der bevorzugte Auftrag der äußeren und der inneren Polymerlagenanordnung durch Extrusionsbeschichtung ist dann mit besonders hoher Qualität und prozesssicher realisierbar, wenn die innere und die äußere Polymerlagenanordnung jeweils ein Polymer mit einem Schmelzflussindex im Bereich von zwischen 3,0 g/10 min und 8,0 g/10 min, besonders bevorzugt von zwischen 4,0 g/10 min und 6,0 g/10 min, jeweils einschließlich der Bereichsgrenzen, aufweisen, gemessen nach DIN EN ISO 1133 mit einer Prüftemperatur von 190 °C und einer Prüflast von 2,16 kg. Dann, wenn die äußere oder/und die innere Polymerlagenanordnung mehrlagig sein sollte, was der Regelfall sein wird, ist es aus demselben Grunde vorteilhaft, wenn ein überwiegender Gewichtsanteil wenigstens einer mehrlagigen Polymerlagenanordnung, besonders bevorzugt wenn die gesamte mehrlagige Polymerlagenanordnung, noch stärker bevorzugt wenn beide mehrlagigen Polymerlagenanordnungen, vollständig aus einem oder mehreren Polymeren mit einem Schmelzflussindex in dem genannten Bereich gebildet ist bzw. sind.

Bevorzugt ist für einen erleichterten Auftrag der äußeren und der inneren Polymerlagenanordnung im fließfähigen Zustand auf eine stabile vorgefertigte Folie der Schmelzflussindex jeder Polymerlagenanordnung aus der äußeren und der inneren Polymerlagenanordnung größer als der Schmelzflussindex der vorgefertigten Folie, gemessen gemäß den vorstehend angegebenen Messbedingungen. Besonders bevorzugt ist der Schmelzflussindex jeder Polymerlagenanordnung aus der äußeren und der inneren Polymerlagenanordnung um wenigstens 2,0 g/10 min, stärker bevorzugt um wenigstens 2,5 g/10 min, noch stärker bevorzugt um wenigstens 3,0 g/10 min größer als der Schmelzflussindex der vorgefertigten Folie.

Eine für einen Auftrag der äußeren und der inneren Polymerlagenanordnung in deren fließfähigem Zustand durch Extrusionsbeschichtung besonders gut geeignete stabile vorgefertigte Folie ist bevorzugt aus einem Polymer mit einem Schmelzflussindex im Bereich von zwischen 0,5 g/10 min und 1,8 g/10 min, vorzugsweise von zwischen 0,7 g/10 min und 1,1 g/10 min, jeweils einschließlich der Bereichsgrenzen, gebildet, gemessen nach DIN EN ISO 1133 mit einer Prüftemperatur von 190 °C und einer Prüflast von 2,16 kg. Dann, wenn die vorgefertigte Folie mehrlagig sein sollte, ist es aus demselben Grunde vorteilhaft, wenn ein überwiegender Gewichtsanteil der polymeren Lagen, besonders bevorzugt wenn die mehrlagige vorgefertigte Folie in ihrer Gesamtheit, noch stärker bevorzugt wenn jede einzelne polymere Lage der mehrlagigen vorgefertigten Folie, vollständig aus einem oder mehreren Polymeren mit einem Schmelzflussindex in dem genannten Bereich gebildet ist bzw. sind.

Grundsätzlich kann bzw. können die innere Polymerlagenanordnung oder/und die äußere Polymerlagenanordnung aus thermoplastischen Polymeren gebildet sein. Bevorzugt wird zur Bildung der inneren Polymerlagenanordnung oder/und der äußeren Polymerlagenanordnung ein Polyolefin, wie Polyethylen (PE) oder Polypropylen (PP), besonders bevorzugt PE, verwendet. Als Materialien für Lagen für die innere Polymerlagenanordnung oder/und die äußere Polymerlagenanordnung kommen außerdem PVOH, BVOH, EVOH und COC infrage. Sofern eine biologische Abbaubarkeit einzelner oder aller Lagen einer Polymerlagenanordnung gewünscht ist, kann Polymilchsäure (PLA) als thermoplastisches Polymer verwendet werden. Ebenso kann die innere Polymerlagenanordnung oder/und die äußere Polymerlagenanordnung Maleinsäureanhydrid-gepfropfte Polymere, Ethylen-Acrylsäure-Copolymer (EAA) oder/und Ethylen-Methylacrylat (EMA) umfassen. Schließlich kann wenigstens eine Polymerlage der inneren Polymerlagenanordnung oder/und der äußeren Polymerlagenanordnung Additive aufweisen, wie Nucleationsmittel zur Erhöhung der Kristallinität einer Lage oder wenigstens teilweise keramische Partikel zur Verminderung der Sauerstoff- oder/und Wasserdampf-Transferrate. Weiter bevorzugt sind dann, wenn sowohl Nucleationsmittel als auch wenigstens teilweise keramische Partikel beigemischt sind, diese in unterschiedlichen Lagen enthalten.

Aus Gründen eines erleichterten Recyclings des Tubenlaminats ist bevorzugt, dass wenigstens eine Polymerlagenanordnung aus der inneren und der äußeren Polymerlagenanordnung, besonders bevorzugt beide Polymerlagenanordnungen, überwiegend oder zu wenigstens 90 %-Gew. aus einem oder mehreren Polymeren gebildet ist, welche auf demselben Monomer basieren. Bevorzugt ist dieses Monomer Ethylen und dass daraus gebildete Polymer Polyethylen. Das Polymer Polyethylen kann jedoch in verschiedenen Typen vorliegen, wie LLDPE, LDPE, MDPE und HDPE oder in Blends davon.

Auch die Trägerstruktur ist aus Gründen eines erleichterten Recyclings überwiegend, vorzugsweise zu wenigstens 90 %-Gew., aus einem oder mehreren Polymeren gebildet ist, welche auf demselben Monomer basieren. Um Rezyklierbarkeit nicht nur einzelner Polymerlagenanordnungen, sondern des gesamten Tubenlaminats zu fördern, ist das Basismonomer der Polymere der Trägerstruktur bevorzugt das Basismonomer der Polymere der inneren und der äußeren Polymerlagenanordnung, besonders bevorzugt also Ethylen.

Erforderlichenfalls kann zur Erhöhung der Festigkeit einer Verbindung der Trägerstruktur mit einer oder mit beiden genannten Polymerlagenanordnungen zwischen der Trägerstruktur und wenigstens einer Polymerlagenanordnung aus der inneren und der äußeren Polymerlagenanordnung eine Primerlage aufgetragen sein. Die Primerlage, die trocken bevorzugt eine Dicke im Bereich von 0,5 g/m² bis 5 g/m² aufweist, ist bevorzugt als wasserbasierte Beschichtung aufgetragen, etwa im Walzenauftrag. Die Primerlage kann PVOH, BVOH, Acryl-modifiziertes Polyethylen, eine Polyolefin-Harz-Emulsion, Polyethylenimin (PEI), Polyurethan, EAA und EAA/Ionomer-Dispersionen aufweisen oder aus solchen Materialien gebildet sein.

In der Regel wird die Primerlage, sofern erforderlich, unmittelbar auf eine freie Oberfläche der Trägerstruktur aufgetragen und dann getrocknet. Nach dem Trocknen der Primerlage erfolgt dann der Auftrag der jeweiligen Polymerlagenanordnung auf die Oberfläche der getrockneten Primerlage.

Zur Sicherung einer möglichst guten Verträglichkeit des Tubenlaminats mit einem sensiblen Füllgut ist die Primerlage bevorzugt aus einer wasserbasierten Dispersion gebildet.

Bevorzugt weist das Tubenlaminat zum Schutz des unter Beteiligung des Tubenlaminats verpackten Füllguts eine Sauerstoff-Transmissionsrate von nicht mehr als 2,0 cm³/(m²·d·bar), vorzugsweise von nicht mehr als 1,5 cm³/(m²·d·bar) auf, gemessen nach DIN 53380-3 unter den Prüfbedingungen von 23 °C Temperatur und 75 % relativer Feuchte.

Zusätzlich oder alternativ weist das Tubenlaminat bevorzugt zum Schutz des unter Beteiligung des Tubenlaminats verpackten Füllguts eine Wasserdampf-Transmissionsrate von nicht mehr als 1,5 g/(m²·d), vorzugsweise von nicht mehr als 1,0 g/(m²·d) auf, gemessen nach DIN EN ISO 15106-3 unter den Prüfbedingungen von 23 °C Temperatur und 85 % relativer Feuchte.

Die Erfindung umfasst auch einen Tubenbehälter, welcher sich längs einer eine axiale Richtung definierenden Tubenlängsachse erstreckt, umfassend einen Tubenkörper und eine Tubenschulter, wobei die Tubenschulter eine Entnahmeöffnung zur Entnahme von im Tubenbehälter verpacktem Füllgut aus dem Tubenkörper umfasst, wobei der Tubenkörper aus einem Tubenlaminat gebildet ist, wie es oben beschrieben und weitergebildet ist, wobei der geschlossen um die Tubenlängsachse umlaufende Tubenkörper an seinem der Tubenschulter näherliegenden axialen Längsende mit der Tubenschulter verbunden ist und wobei der Tubenkörper an seinem der Tubenschulter fernliegenden axialen Längsende durch eine Siegelnaht verschlossen ist.

Das Verfahren zur Herstellung des oben beschriebenen und weitergebildeten Tubenlaminats kann einen Tandemauftrag der inneren und der äußeren Polymerlagenanordnung umfassen. Ebenso kann das Verfahren eine Umlenkung der laufenden Materialbahn nach Auftrag einer Polymerlagenanordnung aus der inneren und der äußeren Polymerlagenanordnung zum anschließenden Auftrag der noch fehlenden jeweils anderen Polymerlagenanordnung umfassen. Die Umlenkung kann durch eine Umlenkwalze oder durch eine Umlenkstange erfolgen.

Die vorliegende Erfindung wird nachfolgend anhand der beiliegenden Zeichnungen näher erläutert werden. Es stellt dar:
- Fig. 1: einen grobschematischen Querschnitt durch eine erfindungsgemäße Aus-führungsform eines Tubenlaminats, und
- Fig. 2: eine grobschematische Ansicht eines unter Beteiligung des Tubenlaminats von Fig. 1 gebildeten Tubenbehälters.

### Die Figuren sind nicht maßstabsgerecht.

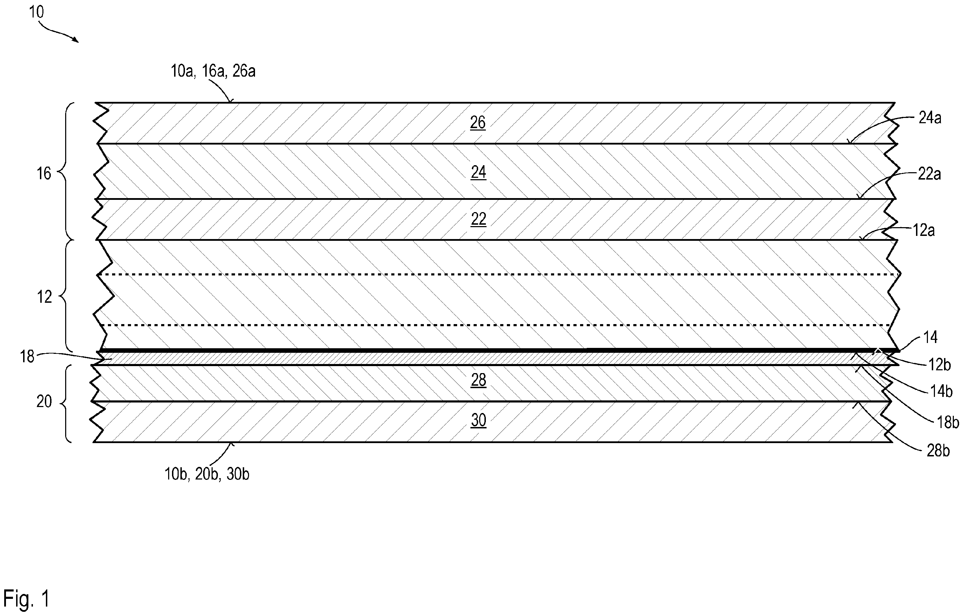

In Figur 1 ist in einer grobschematischen Querschnittsansicht eine erfindungsgemäße Ausführungsform eines mehrlagigen Tubenlaminats 10 dargestellt. Das Tubenlaminat 10 weist eine an einem unter ihrer Beteiligung hergestellten Tubenbehälter zum Verbraucher weisende Außenseite 10a und eine zum verpackten Produkt weisende Innenseite 10b auf. Zur besseren Orientierung sind alle nachfolgend benannten Lagenseiten, welche zum Verbraucher hinweisen mit dem Kleinbuchstaben "a" gekennzeichnet und alle zum Produkt hinweisenden Lagenseiten mit dem Kleinbuchstaben "b".

Eine zentrale Trägerstruktur des Tubenlaminats 10 ist gebildet durch eine vorgefertigte Folie 12, welche im dargestellten Beispiel eine dreilagige Blasfolie aus Polyethylen ist, die auf ihrer Innenseite 12b eine im Vakuum abgeschiedene Metallisierung 14 aus Aluminium trägt.

Strichliniert sind in der Folie 12 die einzelnen Polyethylenlagen angedeutet, die aus Polyethylentypen unterschiedlicher Dichte gebildet sein können.

Die vorgefertigte Folie 12 weist im dargestellten Beispiel eine Dicke von 60 µm auf. Die Dicke der aufgedampften Metallisierung 14 spielt gegenüber der Dicke der Folie keine nennenswerte Rolle.

Die vorgefertigte Folie 12 ist nur beispielhaft gezeigt. Beispielsweise könnte anstelle der dreilagigen Polyethylenfolie 12 eine 7-lagige vorgefertigte Folie verwendet werden, welche anstelle einer Metallisierung eine auf Polyvinylalkohol basierende Barrierelage, beispielsweise eine EVOH-Lage aufweist. Eine solche 7-lagige vorgefertigte Folie kann eine bevorzugte Dicke von zwischen 90 µm und 130 µm aufweisen. Auch eine solche 7-lagige vorgefertigte Folie wird bevorzugt neben der genannten EVOH-Lage und etwaig erforderlichen Haftvermittlerlagen beiderseits der EVOH-Lage bevorzugt nur Polyethylenlagen aufweisen, um einen möglichst hohen Gehalt von Polymeren in der vorgefertigte Folie sicherzustellen, welche auf ein und demselben Monomer, vorliegend Ethylen, basieren. Dies erleichtert das Rezyklieren der vorgefertigten Folie und des Tubenlaminats 10 insgesamt.

Auf die Außenseite 12a der vorgefertigten Folie 12 ist unmittelbar eine äußere Polymerlagenanordnung 16 aufgetragen. Auf der von der Außenseite 12a abgewandten Innenseite 12b der vorgefertigten Folie 12 bzw. Innenseite 14b der aufgedampften Metallisierung 14 trägt die Folie 12 unter Zwischenanordnung einer Primerlage 18 eine innere Polymerlagenanordnung 20. Die Primerlage 18 ist im vorliegenden Ausführungsbeispiel als Haftvermittler zur Metallisierung 14 hin erforderlich.

Die äußere Polymerlagenanordnung 16 und die innere Polymerlagenanordnung 20 sind jeweils vollständig durch Extrusionsbeschichtung im fließfähigen Zustand aufgetragen. Der Auftrag kann schichtweise einzeln oder als Coextrusion unter gleichzeitiger Extrusion von wenigstens zwei unmittelbar benachbarten Schichten erfolgen.

Die Primerlage 18 mit einer bevorzugten Dicke von 1 µm wurde im Walzenauftrag als wässrige Dispersion auf die Metallisierung 14 aufgetragen und dann getrocknet. Nach dem Trocknen kann dann auf die getrocknete Außenseite 18b der Primerlage 18 die Extrusionsbeschichtung der inneren Polymerlagenanordnung 20 erfolgen.

Auf die Außenseite 12a der vorgefertigten Folie 12, welche zunächst eine freiliegende Polyethylenoberfläche darbietet, ist im dargestellten Ausführungsbeispiel eine erste äußere Lage 22 aus Polyethylen mit einer Dicke von 25 bis 35 µm aufextrudiert. Vorliegend ist die erste äußere Polyethylenlage 22 eine Lage aus einem Blend von HDPE und MDPE. Da die Außenseite 10a des Tubenlaminats, welche auch die Außenseite 16a der ersten Polymerlagenanordnung 16 ist, zur Bedruckung mit Druckfarben vorgesehen ist, kann die erste äußere Polyethylenlage 22 weiße Farbpigmente, beispielsweise Titanoxid, umfassen, um für einen späteren Druckfarbenauftrag einen ausreichend blickdichten Untergrund bereitzustellen. Die weißen Farbpigmente sind bevorzugt durch Beimischen eines Masterbatches in den HDPE-MDPE-Blend der ersten äußeren Polyethylenlage 22 eingebracht.

Auf die Außenseite 22a der ersten äußeren Polyethylenlage 22 ist eine zweite äußere Polyethylenlage 24 aufextrudiert, entweder durch Coextrusion mit der ersten äußeren Polyethylenlage 22 oder durch nachfolgendes gesondertes Extrudieren. Im vorliegenden Ausführungsbeispiel weist die zweite äußere Polyethylenlage 24 eine Dicke im Bereich von 30 bis 45 µm auf und ist ebenfalls durch einen Blend von HDPE und MDPE gebildet. Das Mischungsverhältnis von HDPE und MDPE im Blend der zweiten äußeren Polyethylenlage 24 kann dasselbe sein wie im Blend der ersten äußeren Polyethylenlage 22 oder kann davon verschieden sein. Auch die zweite äußere Polyethylenlage 24 weist zur Bereitstellung eines blickdichten neutralen Untergrunds für einen späteren Druckfarbenauftrag weiße Farbpigmente auf. Auch im Falle der zweiten äußeren Polyethylenlage 24 sind diese bevorzugt als Masterbatch eingemischt. Dann, wenn nur eine Lage der äußeren Polymerlagenanordnung 16 mit Farbpigmenten, insbesondere mit weißen Farbpigmenten, gefüllt sein soll, ist dies bevorzugt die zweite äußere Polyethylenlage 24.

Auf die Außenseite 24a der zweiten äußeren Polyethylenlage 24 ist eine dritte äußere Polyethylenlage 26 aufextrudiert, wiederum entweder als extrudierte Einzellage oder in Coextrusion mit der zweiten äußeren Polyethylenlage 24.

Die Außenseite 26a der dritten äußeren Polyethylenlage 26, welche auch Außenseite 16a der äußeren Polymerlagenanordnung 16 und Außenseite 10a des Tubenlaminats 10 ist, ist zur Aufnahme von Druckfarben durch eine nachfolgende Bedruckung bestimmt. Außerdem soll sie mit der die Innenseite 10b des Tubenlaminats 10 bildenden Innenseite 20b der inneren Polymerlagenanordnung 20 siegelfähig sein. Die dritte äußere Polyethylenlage 26 weist zur Verbesserung ihrer Siegelfähigkeit einen Blend aus MDPE und LDPE oder aus MDPE und LLDPE auf. Vorliegend ist ein Blend aus MDPE und LDPE bevorzugt. Die dritte äußere Polyethylenlage 26 weist eine Dicke im Bereich von 20 bis 40 µm auf.

Auf den getrockneten Primer 18 ist eine erste innere Polyethylenlage 28 der inneren Polymerlagenanordnung 20 aufextrudiert. Diese erste innere Polyethylenlage 28 kann wie die erste äußere Polyethylenlage 22 aus einem Blend von HDPE und MDPE gebildet sein. Im konkreten Ausführungsbeispiel ist die erste innere Polyethylenlage 28 aus LDPE gebildet. Die erste innere Polyethylenlage 28 kann eine Dicke von 20 bis 40 µm aufweisen. Im dargestellten Ausführungsbeispiel weist sie eine Dicke von 30 µm auf.

Auf die Außenseite 28a der ersten inneren Polyethylenlage 28 ist eine zweite innere Polyethylenlage 30 aufextrudiert, welche siegelfähig ist. Die Extrusion der zweiten inneren Polyethylenlage 30 kann als Coextrusion mit der ersten inneren Polyethylenlage 28 oder als gesonderte Extrusion einer Einzellage erfolgen.

Um eine möglichst hohe Siegelqualität zur Siegelung mit der dritten äußeren Polyethylenlage 26 sicherzustellen, ist die zweite innere Polyethylenlage 30 aus demselben Blend gebildet wie die dritte äußere Polyethylenlage 26, vorliegend also aus einem Blend aus MDPE und LDPE, wobei auch hier anstelle von LDPE LLDPE verwendet werden könnte.

Die zweite innere Polyethylenlage 30 weist im dargestellten Ausführungsbeispiel auch die gleiche Dicke auf wie die dritte äußere Polyethylenlage 26, also 40 µm wenngleich dies nicht so sein muss. Die zweite innere Polyethylenlage 30 kann eine Dicke im Bereich von 25 bis 45 µm, vorzugsweise im Bereich von 30 bis 40 µm aufweisen.

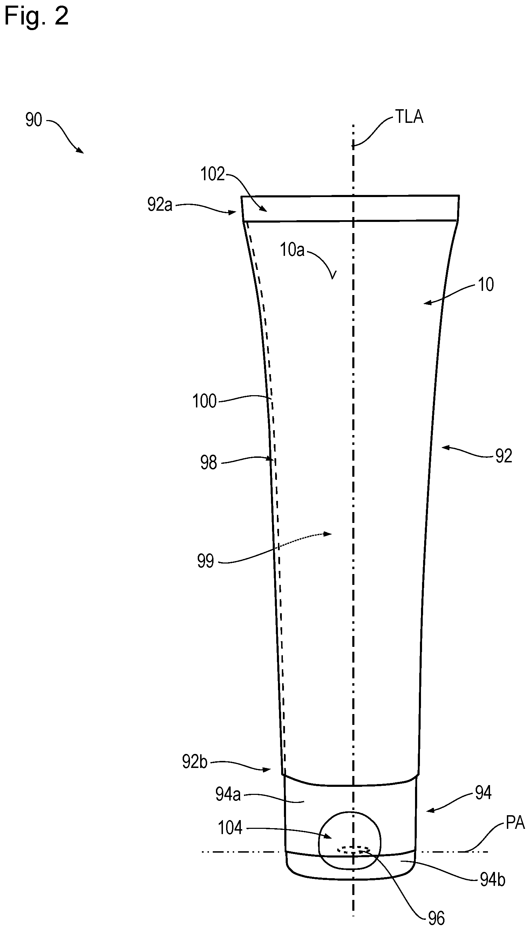

Die zweite innere Polyethylenlage 30 wird nicht nur zur Bildung des nachfolgend erläuterten Tubenkörpers 92 mit der dritten äußeren Polyethylenlage 26 gesiegelt, sondern auch mit der Außenseite einer Tubenschulter 94a eines Tubenkopfes 94 wie er in Figur 2 gezeigt ist.

Figur 2 zeigt eine schematische Vorderansicht eines Tubenbehälters 90, der einen Tubenkörper 92 aus dem mehrlagigen Tubenlaminat 10 und einen Tubenkopf 94 aufweist. Der Tubenkopf 94 umfasst eine Tubenschulter 94a und einen einstückig mit der Tubenschulter schwenkbar verbundenen Deckel 94b, auf dem der Tubenbehälter 90 stehen kann.

Zur Bildung des Tubenkörpers 92 wird ein Zuschnitt des mehrlagigen Tubenlaminats 10 um einen Dorn gewickelt, so dass sich die umlaufenden Endbereiche des gewickelten Zuschnitts überlappen. In dem so entstandenen Überlappungsbereich 98 überlappt die freiliegende innerste Polymeroberfläche 10b die freiliegende äußerste Polymeroberfläche 10a axial entlang einer Tubenlängsachse TLA und in Umfangsrichtung um die Tubenlängsachse TLA. Die beiden freiliegenden Polymeroberflächen 10a und 10b sowie die sie bildenden Polyethylenlagen 26 und 30 werden im Überlappungsbereich 98 durch Heißsiegeln verbunden, so dass eine Längsverbindungsnaht 100 als Lap-Siegelung in einer Überlappungskonfiguration entsteht.

An dem geschlossenen, dem Tubenkopf 94 abgewandten Längsende 92a ist der Tubenkörper 92 durch eine Fin-Siegelnaht 102 verschlossen. Anders als in der Längsverbindungsnaht 100, wo die freiliegende Innenfläche 10b mit der freiliegenden Außenfläche 10a versiegelt ist, sind in der Quernaht 102 gegenüberliegende Bereiche der Innenfläche 10b miteinander versiegelt.

Der Tubenkörper 92 umschließt an dem offenen Längsende 92b nahe dem Tubenkopf 94 einen Teil der Tubenschulter 94a des Tubenkopfes 94 und überlappt diesen in axialer Richtung und in Umfangsrichtung vollständig. Die überlappenden Teile des Tubenkörpers 92 und der Tubenschulter 94a sind ebenfalls durch Heißsiegelung verbunden. Zu diesem Zweck ist der Tubenkopf 94 aus spritzgegossenem Polyethylen geformt, so dass die Materialien des Tubenkopfes 94 und der Polyethylenlage 30 des mehrschichtigen Tubenlaminats 10 miteinander kompatibel sind. In einem von dem Tubenbehälter 90 umschlossenen Verpackungsraum 99 kann z. B. ein pastöses Produkt aufgenommen werden, das durch eine Tubenöffnung 96 freigegeben werden kann.

Der Deckel 94b ist um eine Schwenkachse PA schwenkbar, zum Beispiel durch eine Folienverbindung, die den Deckel 94b einstückig mit der Tubenschulter 94a verbindet, um die Tubenöffnung 96 abzudecken. Eine Vertiefung 104 erleichtert das Abheben des Deckels 94a von der Tubenschulter 94a zum Öffnen des Tubenbehälters 90.

## Patentansprüche

1. Tubenlaminat (10), umfassend wenigstens drei Polymerlagenanordnungen (12, 16, 20) mit jeweils wenigstens einer Polymerlage (22, 24, 26, 28, 30), wobei genau eine Polymerlagenanordnung (12, 16, 20) als Trägerstruktur (12) eine vorgefertigte Folie (12) ist, wobei eine erste Seite (12a) der vorgefertigten Folie (12) eine eine Außenseite (10a) des Tubenlaminats (10) bildende äußere Polymerlagenanordnung (16) trägt, und wobei eine der ersten Seite (12a) entgegengesetzte zweite Seite (12b) der vorgefertigten Folie eine eine Innenseite (10b) des Tubenlaminats (10) bildende innere Polymerlagenanordnung (20) trägt, wobei die äußere (16) und die innere Polymerlagenanordnung (20) im fließfähigen Zustand aufgetragene Polymerlagenanordnungen (16, 20) sind, wobei das Tubenlaminat (10) außer der Trägerstruktur (12) keine weitere vorgefertigte Folie aufweist.

2. Tubenlaminat (10) nach Anspruch 1,
**dadurch gekennzeichnet, dass** das Tubenlaminat (10) eine Gesamtdicke von zwischen 110 µm und 350 µm aufweist, einschließlich der Bereichsgrenzen.

3. Tubenlaminat (10) nach Anspruch 1 oder 2,
**dadurch gekennzeichnet, dass** die Trägerstruktur (12) eine Dicke von zwischen 30 µm und 200 µm aufweist, einschließlich der Bereichsgrenzen.

4. Tubenlaminat (10) nach einem der vorhergehenden Ansprüche,
**dadurch gekennzeichnet, dass** die vorgefertigte Folie (12) eine Blasfolie oder Cast-Folie ist.

5. Tubenlaminat (10) nach einem der vorhergehenden Ansprüche,
**dadurch gekennzeichnet, dass** die vorgefertigte Folie (12) mehrlagig ist.

6. Tubenlaminat (10) nach einem der vorhergehenden Ansprüche,
**dadurch gekennzeichnet, dass** die vorgefertigte Folie (12) als Barrierlagenanordnung eine Metallisierung (14) oder/und eine Keramiklage oder/und eine Lage basierend auf einem Vinylalkohol oder/und eine mit wenigstens teilweise keramischen Partikeln gefüllte Polymerlage aufweist.

7. Tubenlaminat (10) nach einem der vorhergehenden Ansprüche,
**dadurch gekennzeichnet, dass** die innere (20) und die äußere Polymerlagenanordnung (16) jeweils eine Dicke im Bereich von zwischen 15 µm und 130 µm aufweisen, einschließlich der Bereichsgrenzen.

8. Tubenlaminat (10) nach einem der vorhergehenden Ansprüche,
**dadurch gekennzeichnet, dass** die äußere Polymerlagenanordnung (16) die gleiche Dicke aufweist wie oder eine größere Dicke aufweist als die innere Polymerlagenanordnung (20).

9. Tubenlaminat (10) nach einem der vorhergehenden Ansprüche,
**dadurch gekennzeichnet, dass** die innere (20) und die äußere Polymerlagenanordnung (16) jeweils ein Polymer mit einem Schmelzflussindex im Bereich von zwischen 3,0 g/10 min bis 8,0 g/10 min, einschließlich der Bereichsgrenzen, aufweisen, gemessen nach DIN EN ISO 1133 mit einer Prüftemperatur von 190 °C und einer Prüflast von 2,16 kg, oder vollständig aus einem oder mehreren Polymeren mit einem Schmelzflussindex in diesem Bereich gebildet sind, wobei bevorzugt der Schmelzflussindex der inneren (20) und der äußeren Polymerlagenanordnung (16) jeweils größer ist als der Schmelzflussindex der vorgefertigten Folie (12), gemessen nach DIN EN ISO 1133 mit einer Prüftemperatur von 190 °C und einer Prüflast von 2,16 kg.

10. Tubenlaminat (10) nach einem der vorhergehenden Ansprüche,
**dadurch gekennzeichnet, dass** wenigstens eine Polymerlagenanordnung (16, 20) aus der inneren (20) und der äußeren Polymerlagenanordnung (16) überwiegend oder wenigstens zu 90 %-Gew. aus einem oder mehreren Polymeren gebildet ist, welche auf demselben Monomer basieren.

11. Tubenlaminat (10) nach einem der vorhergehenden Ansprüche,
**dadurch gekennzeichnet, dass** zwischen der Trägerstruktur (12) und wenigstens einer Polymerlagenanordnung (16, 20) aus der inneren (20) und der äußeren Polymerlagenanordnung (16) eine Primerlage (18) aufgetragen ist.

12. Tubenlaminat (10) nach Anspruch 11,
**dadurch gekennzeichnet, dass** die Primerlage (18) aus einer wasserbasierten Dispersion gebildet ist.

13. Tubenlaminat (10) nach einem der vorhergehenden Ansprüche,
**dadurch gekennzeichnet, dass** wenigstens eine Polymerlagenanordnung (16, 20) aus der inneren (20) und der äußeren Polymerlagenanordnung (16) eine freiliegende siegelfähige Oberfläche (16a, 20b) bereitstellt oder/und dass die äußere Polymerlagenanordnung (16) eine freiliegende bedruckbare Oberfläche (16a) bereitstellt.

14. Tubenbehälter (90), welcher sich längs einer eine axiale Richtung definierenden Tubenlängsachse (TLA) erstreckt, umfassend einen Tubenkörper (92) und eine Tubenschulter (94a), wobei die Tubenschulter (94a) eine Entnahmeöffnung zur Entnahme von im Tubenbehälter (90) verpacktem Füllgut aus dem Tubenkörper (92) umfasst, wobei der Tubenkörper (92) aus einem Tubenlaminat (10) nach einem der vorhergehenden Ansprüche gebildet ist, wobei der geschlossen um die Tubenlängsachse (TLA) umlaufende Tubenkörper (92) an seinem der Tubenschulter (94a) näherliegenden axialen Längsende (92b) mit der Tubenschulter (94a) verbunden ist und wobei der Tubenkörper (92) an seinem der Tubenschulter (94a) fernliegenden axialen Längsende (92a) durch eine Siegelnaht (102) verschlossen ist.

15. Verfahren zur Herstellung eines Tubenlaminats (10) nach einem der Ansprüche 1 bis 13, umfassend die folgenden Schritte:
- Bereitstellen einer Polymerlagenanordnung (12) in Gestalt einer vorgefertigten Folie (12) als Trägerstruktur (12),
- Auftragen einer äußeren Polymerlagenanordnung (16) im fließfähigen Zustand auf einer ersten Seite der Trägerstruktur (12) und dadurch Bilden einer freiliegenden Außenseite (10a) des Tubenlaminats (10), und
- Auftragen einer inneren Polymerlagenanordnung (20) im fließfähigen Zustand auf einer der ersten entgegengesetzten zweiten Seite der Trägerstruktur (12) und dadurch Bilden einer freiliegenden Innenseite (10b) des Tubenlaminats (10).
